# EUROPEAN PATENT SPECIFICATION

(11) **EP 4 227 463 B1**
(45) Date of publication and mention of the grant of the patent: **18.09.2024**
(21) Application number: 23156257.0
(22) Date of filing: 13.02.2023
(51) Int. Cl.: E01C 19/20, E01H 10/00, G01C 21/34, G01N 27/10

(54) **APPARATUS AND METHOD FOR IMPROVING TREATMENT MATERIAL DEPLOYMENT**
VORRICHTUNG UND VERFAHREN ZUR VERBESSERUNG DER FREISETZUNG VON BEHANDLUNGSMATERIAL
APPAREIL ET PROCÉDÉ POUR AMÉLIORER LE DÉPLOIEMENT DE MATÉRIAU DE TRAITEMENT

(30) Priority: 15.02.2022 GB 202202019
(43) Date of publication of application: 16.08.2023
(73) Proprietor: Illinois Tool Works Inc., Glenview IL 60025 (US)
(72) Inventor: SHIELDS, Pamela, Glenview, 60025 (US); LARKIN, Jason, Glenview, 60025 (US)
(74) Representative: HGF

(56) References cited:
- EP-A1- 1 602 913
- IT-A1- TO20 121 153
- US-A- 6 154 699
- US-B1- 6 246 938

## Description

### Field of the Invention

The present invention relates to a control system, method, and vehicle for improving the effectiveness of treatment material deployed by a gritting vehicle.

### Background

Roads are a common carriageway for many users to travel (e.g. in cars, buses or bicycles). An ability of a road user to travel on a given road is based, at least in part, on weather conditions. For example, during cold weather, roads may become covered in ice and/or snow, which may result in dangerous driving conditions due to the user's vehicle not being able to effectively grip the road surface. Commonly, during weather where the road surface may be, or is, covered in ice, a road treatment material such as a solid material (e.g. rock salt) or a liquid such as a urea based treatment that prevents and reduces the build-up of ice may be applied to the road surface.

Generally, the process of road treatment is performed by a road treatment vehicle, equipped with a supply of a road treatment material. The vehicle is associated with a control system for assisting the driver following a route around a portion of a road network to treat the road sections along the route with the road treatment material. The device stores data indicative of the route to be followed by the vehicle. The stored data may also indicate attributes of the road treatment material to be deployed on each road section of the route. The attributes of the road treatment material may be determined based on a severity of treatment required (e.g. based on an ice coverage of the road section). However, the characteristics (e.g. residual salinity from previous treatments, road type, etc, as will be herein disclosed) of each road section may be different. Therefore, data from a road section may be utilised for determining an optimal amount and/or type of treatment material when the road section is re-treated in the future. EP1602913A1 is directed to enabling a salt concentration measuring process to be executed even in the case where a road surface is dry and determining a scatter amount of an anti-freezing agent on the basis of the measurement value of salt concentration. ITTO20121153A1 relates to a measurement method for determining salinity on a road surface. US6154699A relates to methods, apparatus and control systems for dispensing salt, grit or other substances on surfaces. US6246938B1 relates to a vehicle having a GPS receiver cooperating with a satellite positioning system in order to determine the position of the vehicle and subsequently to control, on the basis of the position detected, a distribution device and its spreading methods as a function of the positions of the vehicle along a road route.

It is an object of embodiments of the invention to at least mitigate one or more of the problems of the prior art.

### Summary of the Invention

According to an aspect of the invention, there is provided a control system for a road treatment vehicle in accordance with the appended claims.

According to an aspect of the invention, there is provided a method performed by a control system for a road treatment vehicle in accordance with the appended claims.

Also disclosed herein, there is provided an example method further comprising: deploying, by a deployment means of the road treatment vehicle, the treatment material on the road section according to the one or more road treatment parameters for the road treatment material.

According to an aspect of the invention, there is provided a vehicle, comprising the control system defined by the appended claims.

According to an aspect of the invention, there is provided computer-readable medium comprising instructions which, when executed, are arranged to perform the method defined by the appended claims.

### Brief Description of the Drawings

Embodiments of the invention will now be described by way of example only, with reference to the accompanying figures, in which:
Figure 1a and 1b show an example of a control system according to an embodiment of the present invention;
Figures 2a and 2b show an example of a road treatment vehicle according to an embodiment of the present invention;
Figures 3a and 3b show an example of road treatment parameters according to an embodiment of the present invention; and
Figure 4 shows an example of a method according to an embodiment of the present invention.

### Detailed Description of Embodiments of the Invention

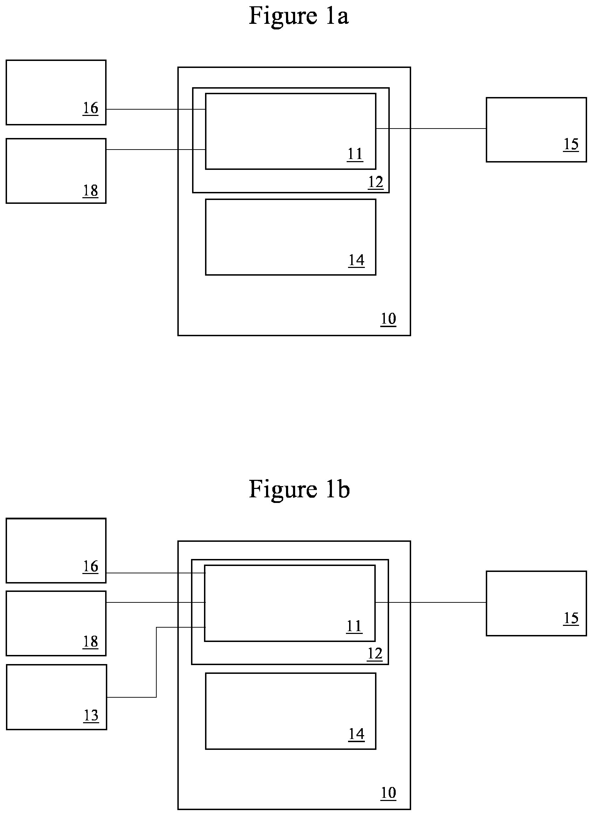

Figure 1a shows an example of a control system 10 according to an embodiment of the present invention. The control system 10 is a control system 10 for a road treatment vehicle 20 as will be explained. The road treatment vehicle may be a road treatment vehicle (e.g. a gritting vehicle) that is configured for deploying a treatment material (e.g. salt, sand) during conditions whereby road surfaces are covered in ice. The road treatment vehicle may be configured to leave a vehicle depot/hub and treat a predetermined set of roads within a road network (e.g. a route for treatment). The predetermined route to be followed may be indicated by map data that is preloaded into a control system 10 of the road treatment vehicle 10.

Within the map data, the road network may be divided into one or more sequential road sections which may require a different level of treatment. As an example, the road sections may represent one or more of: individual streets, segments of equal length (e.g. 10m sections from the predetermined route), and/or segments of similar/the same characteristics (e.g. the same road surface construction).

The control system 10 may be one of a plurality of control systems within the road treatment vehicle 20. Each one of the plurality of control systems may be configured to perform respective operations individually and independently, as will be understood by the person skilled in the art. The control system 10 is configured to receive, from a salinity sensor 22 associated with the road treatment vehicle 20, salinity data 16 comprising an indication of a salinity associated with a surface of a road section on which the road treatment vehicle 20 is located. The control system 10 is configured to receive, from a storage unit of the control system, historical data 18 comprising historical salinity data indicating the salinity associated with the surface of the road section on which the road treatment vehicle is located at a previous time. The control system 10 is configured to determine, in dependence on receiving the salinity data and the historical data, one or more road treatment parameter 15 for the road treatment material.

The control system 10 comprises a processor 12, and a storage unit 14. The processor 12 may comprise any suitable electronic processor (e.g., a microprocessor, a microcontroller, an ASIC, etc.) that is configured to execute electronic or computer-readable instructions, stored in the storage unit 14. According to the invention, the processor 12 accesses the storage unit 14 and executes and/ or uses the instructions to carry out or perform some or all of the functionality and methodology describe herein. The storage unit 14 may comprise one or more memory devices for storing data therein. The storage unit 14 may include a volatile memory and/or a non-volatile memory. The storage unit 14 may, for example, store an instruction or data associated with at least the road treatment vehicle 20, the salinity data and/or the historical data. For example, the storage unit 14 may store map data, indicating a route that the route treatment vehicle 20 should follow while treating a road network. In some examples, the storage unit 14 may store a software and/or a program.

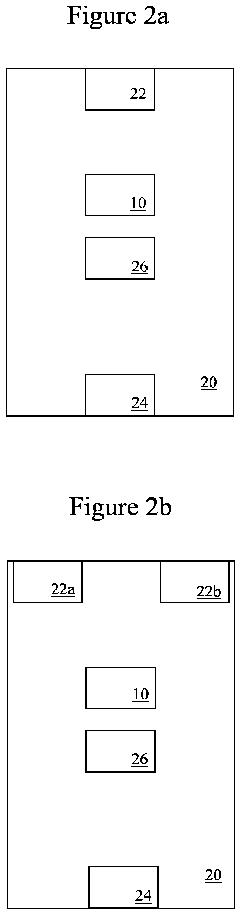

The control system 10 may be configured to receive data over a wired and/or wireless communication protocol. For example, the control system 10 may be configured to communicate with an external device (e.g. a server or the like) over a wired and/or wireless communication protocol to receive the salinity data 16, the historical data 18 and/or map data. As another example, the control system 10 may receive location information over a wired communication protocol from a location sensor 26 associated with the road treatment vehicle 20, as will be discussed in relation to Figures 2a-2b. The control system 10 may be connected to and/or comprise one or more transceivers. The transceivers may be configured to transmit and receive information according to a communication protocol, which may be a wireless communication protocol. The wireless communication protocol may utilise radio communication, such as Bluetooth, Wi-Fi, over a wireless cellular network e.g. 4G, 5G etc, or similar. In some examples, the transceiver may be configured to transmit and receive data using a combination of wired and wireless communication protocols.

In some embodiments, the control system 10 may be integrated with the road treatment vehicle 20. For example, the control system 10 may be a unit integrated in or mounted upon a control panel of the road treatment vehicle 20 (e.g. a dashboard console). In some embodiments, the control system 10 may be removeable from the road treatment vehicle 20. For example, the control system 10 may be a portable unit that may be communicatively connected to the road treatment vehicle 20, and may be removably connected/integrated into the road treatment vehicle 20, such as, by using a docking station for the control system 10, for example. In some examples, the control system 10 may be connected to and/or comprise an interface unit 102. The interface unit 102 may be configured to receive a user input; for example the interface unit 102 may comprise one or more of a keyboard, mouse, touchscreen and/or similar.

According to the invention, the control system 10 is configured to receive, from a salinity sensor 22 associated with the road treatment vehicle, discussed in relation to Figures 2a-2b, salinity data 16. The salinity data 16 comprises an indication of a salinity associated with a surface of a road section on which the road treatment vehicle is located.

According to the invention, the control system 10 is configured to receive, from the storage unit 14 of the control system 10, historical data 18. The historical data 18 comprises the historical salinity data indicating the salinity associated with the surface of the road section on which road treatment vehicle 20 is located at the previous time. The previous time may be a time when a road treatment vehicle 20 captured salinity data on the road section. That is, when a control system 10 receives data (e.g. salinity data), the received data is stored for use as historical data 18, corresponding to the location it was received. In some examples, the control system 10 may be configured to determine the historical data 18 associated with the road treatment vehicle's current location by consulting a historical data 18 look-up table, or other data structure, using location information of the road treatment vehicle 20. In some examples, the historical data 18 may be preloaded into the map data and received by the control system 10 while the road treatment vehicle 20 travels a route.

According to the invention, the control system 10 is configured to determine the one or more road treatment parameter 15 for the road treatment material based on the salinity data 16 and the historical data 18. For example, the control system 10 may determine the one or more road treatment parameter 15 using a look-up table and/or function, using the salinity data and the historical data as input values. The look-up table and/or function may define a relationship reflecting an estimated change over time in the salinity associated with each road section. In some examples, the control system 10 may be configured to receive environment data, the salinity data 16, and the historical data 18 and determine the one or more road treatment parameter 15 based on the environment data, the salinity data 16, and the historical data 18 using the look-up table and/or the function, discussed above. The environment data will be discussed in further detail below.

In some embodiments, the control system 10 may be configured to receive historical data 18 comprising the historical salinity data and previous treatment information. As an example, the previous treatment information may be received from the storage unit 14, the map data, and/or the server. The previous treatment information may indicate one or more of a previous amount of treatment material used on the road section during a previous treatment of the road section, a previous composition of the treatment material used on the road section during a previous treatment of the road section; and an elapsed time since the previous treatment has taken place. For example, the previous treatment information may indicate that the road section was previously treated 18 hours ago with a large amount of treatment material.

According to the invention, the control system 10 is configured to receive, from a salinity sensor 22 associated with the road treatment vehicle 20, salinity data 16 comprising an indication of a salinity associated with a surface of a road section on which the road treatment vehicle 20 is located. According to the invention, the control system 10 is configured to receive, from a storage unit of the control system, historical data 18 comprising historical salinity data indicating the salinity associated with the surface of the road section on which the road treatment vehicle is located at a previous time.

According to the invention, the control system 10 is configured to determine a treatment material index 11 for the road section indicating a degradation rate of treatment material for the road section based on the salinity data 16 and the historical data 18. According to the invention, the control system 10 is configured to determine, in dependence on determining the treatment material index 11, the one or more road treatment parameter 15 for the road treatment material.

The treatment material index 11 indicates a degradation rate of the treatment material for each of a plurality of road sections on which the road treatment vehicle 20 may be located, presently or at a future time. That is, the treatment material index 11 may indicate a removal rate of the treatment material from the road surface over time. For example, the treatment material may be removed from the road surface by: the treatment material becoming attached to vehicles (e.g. via the vehicle's tyre), due to the weather (e.g. wind blowing the treatment material away, or precipitation flows carrying the treatment material away and/or dissolving the treatment material). In other words, the degradation rate may be indicative of a "stickiness" between the road surface and the road treatment material and provides an indication of a quantity of treatment material which is carried away from the road section per unit time (g s⁻¹). The treatment material index 11 may be represented by one or more values and may be inversely proportional to the "stickiness" of the road surface and the road treatment material. In embodiments, a first value for the treatment material index may indicate that the degradation rate of the treatment material for the road section is high, and therefore degrades at a high rate. In embodiments, a second value for the treatment material index may indicate that the degradation rate of the treatment material for the road section is low, and therefore degrades at a low rate. Values intermediate the first and second values represent intermediate degradation rates. In some embodiments, the value of the treatment material index 11 may be a positive value and between a predefined range (e.g. 0 and 10, although other values may be used). However, in some embodiments, the value of the treatment material index 11 may be positive or negative and between another predefined range (e.g. -10 and 10, whereby a negative treatment material index indicates that there is already too much treatment material present on the road surface). The treatment material index 11 may be derived using historical road treatment data, such as measurements. The treatment material index 11 may be determined by inputting data into a polynomial equation, derived using historical road treatment data, and/or using a look-up table, derived using historical road treatment data.

According to the invention, the control system 10 is configured to determine the treatment material index 11 based on the salinity data 16 and the historical data 18. For example, the control system 10 may input the received salinity data 16 and historical data 18 into an equation to determine the treatment material index 11. For example, the salinity data 16 may indicate that a current salinity of the road section's surface is 15 g m⁻² and the historical data 18 may indicate that the salinity of the road section's surface at the previous time was 30 g m⁻². Therefore, the control system may input the salinity data 16 and historical data 18 into the equation and determine a suitable treatment material index 11, given the change in the salinity from the previous time and receiving the current salinity indicated by salinity data 16. However, as discussed later, the control system 10 may receive one or more sources of environment data 13 as well as the salinity data and the historical data as input into the equation.

In some embodiments, the control system 10 may determine the treatment material index 11 by consulting the look-up table, or other data structure, using the salinity data 16 and the historical data 18 (based on the location information) to determine the treatment material index 11 that is associated with the road treatment vehicle's current location.

In further embodiments, the control system 10 may store the treatment material index 11 in a treatment material index look-up table. In such embodiments, the control system 10 may be configured to update the treatment material index 11 stored in the treatment material index look-up table when the determined treatment material index 11 is not within a predetermined threshold of the previous treatment material index 11. In some examples, the treatment material index 11 may be used for determining an estimate of one or more of the road treatment parameter 15 for the road treatment material for use on the road section, when a future route for the road treatment is determined. That is, the treatment material index 11 for the road section may be taken into account when determining future treatment of the road section.

Advantageously, it may be possible to appropriately treat road sections, such as by reducing chances of over and under treating road sections within a route, by taking account degradation of a treatment material on the respective road sections. By reducing under-treatment of road sections, road user safety may be increased. By reducing over-treatment of road sections, environmental effects, caused by treatment material runoff into water supplies (as one example), may be reduced. Furthermore, costs may be reduced. Advantageously, by taking the treatment material index 11 into account when determining future treatment of the road section, the road treatment vehicle 20 may only be loaded with an amount of each of the constituents of the road material in the amounts required for a particular route, meaning that scenarios where too little or too much of the constituents of the road material are loaded in to the road treatment material, are avoided. As such, more efficient use of road treatment material may be achieved. Advantageously, by determining the degradation rate of the treatment material for the road section, the control system 10 is able to determine a quantity of treatment material required such that an estimated time until the next road treatment is required (i.e. a time when the treatment material has degraded entirely and/or degraded below a threshold presence on the road section).

The control system 10 may not be limited to determine the treatment material index 11 based on the only the indication of the salinity data 16 and the historical data 18. As shown in Figure 1b, the control system 10 may be configured to: receive environment data 13, salinity data 16, and historical data 18 and determine the treatment material index 11 based on the salinity data 16, historical data 18 and the environmental data 13. As above, the control system 10 may be configured to determine the treatment material index 11 based on the environment data 13, salinity data 16, and historical data 18 using an equation and/or look-up table.

The environment data 13 may comprise one or more of: traffic information relating to the road section, weather information relating to the road section, road information relating to the road section, and road gradient information relating to the road section. In some embodiments, one or more of the traffic information, the weather information, road information, and the road gradient information may be received by the control system 10 from the storage unit 14 and/or a server, communicatively connected with the control system 10. For example, the environment data 13 may be stored and mapped to determined location information such that the control system 10 is aware of the environment data 13 of the road section on which the road treatment vehicle 20 is presently located. As an example, the environment data 13 may be received as part of map data for the road treatment vehicle 20 to follow during the road treatment. In some embodiments, the environment data 13 may be received by the control system 10 from a vehicle-to-everything (V2X) communication. For example, the environment data 13 may be received from another vehicle on the road section. Further, the environment data 13 may be received from one or more associated sensor, associated with a sensor, as will be discussed below.

In some embodiments, the control system 10 may be configured to receive the environment data 13 comprising the traffic information relating to the road section. As an example, the traffic information may be received from one or more of the storage unit 14, received as part of route data and/or the server; a sensor (e.g. a proximity sensor), detecting an amount of vehicles, surrounding the road treatment vehicle 20; and the V2X communication. The traffic information may indicate a level of traffic on the road section for one or more of: a time period since the previous time (e.g. since the historical data was captured, discussed above); and a forecasted time period.. For example, the traffic information may indicate that the level of traffic since the road section was treated was high. When a traffic level is considered high, it may be expected that a high amount and/or frequency of road vehicles drive through the road section, picking up and dispersing any deployed road treatment material from the road section. As such, the control system 10 may determine a high treatment material index 11, indicating a high degradation rate for the road section, based on the traffic information indicating a high level of traffic on the road section during the predetermined time period. In some examples, the traffic information may indicate that the level of traffic on the road section is forecast to be low and, as such, the control system 10 may determine a low treatment material index 11. In some examples, the control system 10 may determine the treatment material index 11 based on both the level of traffic for the time period since the previous time and the forecasted traffic level.

In some embodiments, the control system 10 may be configured to receive the environment data 13 comprising the weather information. As an example, the weather information may be received from one or more of the storage unit 14 and/or the server, a sensor (e.g. a weather detecting sensor); and V2X communication. The weather information may indicate weather conditions on the road for one or more of: the time period since the previous time; and the forecasted time period. For example, the weather information may comprise one or more of temperature information, precipitation information, and wind information. The temperature information may indicate one or more of an air temperature and a road surface temperature and may be determined using a temperature sensor associated with the road treatment vehicle. For example, when the road temperature is low the degradation rate of the treatment material for the road section may be also low. The precipitation information may indicate one or more of: a probability that precipitation will occur on the road section; an amount of precipitation estimated to occur on the road section; whether precipitation has occurred on the road section; and an amount of precipitation occurring on the road section. For example, when the precipitation information indicates that the probability of precipitation occurring on the road section is high and in a high amount, the degradation rate of the road treatment material may be high due to the precipitation potentially carrying the road treatment material away from the road section. The wind information may indicate one or more of a forecasted wind speed and a forecasted wind direction. For example, when the wind information indicates that the wind speed is likely to be high, the degradation rate of the road treatment material may be high due to the wind potentially carrying the road treatment material away from the road section.

In some embodiments, the control system 10 may be configured to receive the environment data 13 comprising the road information. As an example, the road information may be received from one or more of the storage unit 14 and/or the server; a sensor (e.g. an image sensor); and the V2X communication. The road information may be determined and/or captured by one or more of an image sensor of the road treatment vehicle 20 and map data associated with a route being followed by the road treatment vehicle 20. For example, the map data may indicate the road information for each road section included in the associated route. As another example, the image sensor may collect data of the road surface and analyse the collected data to determine the road information of the road section. For example, the image sensor of the road treatment vehicle 20 may be a camera and/or a laser scanner operable to emit and/or capture visible light, infra-red light, and/or ultraviolet light data. The image sensor may then determine the road information from the captured data using an image analysis module, which may use visual intelligence, a look-up table, and/or the like. In some examples, the image sensor may determine variations of the road information across the road section on which the road treatment vehicle 20 is located. That is, the image sensor may determine a distribution of road information across the road section, and reflect the distribution of the road information across the road section in the treatment material index. In some embodiments, the road treatment vehicle 20 may comprise at least two image sensors. The at least two image sensors may be configured to capture the road information. The at least two image sensors may be spaced apart, located in respective image sensor positions around the road treatment vehicle 20. For example, the at least two image sensors may be located on the front of the road treatment vehicle 20. As another example, the at least two image sensors may be respectively placed along a front bumper of the road treatment vehicle 20. In some embodiments, the at least two image sensors may be respectively located around the road treatment vehicle 20 so as to provide a 360° range within which road information can be captured by the at least two image sensors.

The road information may relate to a property of the road section. In some embodiments, the road information comprises one or more of an indication of a road type of the road section; an indication of a roughness of the road section; an indication of a porosity of the road section; an indication of a presence of a pothole in the road section; and an indication of a presence of a lane groove in the road section.

For example, the indication of the road type of the road section may indicate whether the road section is an A-road, B-road, country lane, dual-carriageway, and/or the like. In some examples, the indication of the road type of the road section may indicate a width of the road and/or a lane on/in which the road treatment vehicle 20 is located. For example, the road information may indicate that the road type of the road section is an A-road and a dual-carriageway and, as such, the road section is likely to have a high volume of traffic. As such, the control system 10 may determine a high treatment material index 11, indicating a high degradation rate for the road section.

For example, the indication of the roughness of the road section may indicate a roughness of the surface of the road section and may indicate where particularly rough or smooth sections of the surface of the road section are. For example, the road section may be rough and therefore, the road treatment material may not be easily displaced from the road section. As such, the control system 10 may determine a low treatment material index 11, indicating a lower degradation rate for the road section, based on the indication that the road section is rough.

For example, the indication of the porosity of the road section may indicate the porosity of the road surface of the road section on which the road treatment vehicle 20 is located. Road networks may be made with different materials (e.g. tarmac, gravel, etc), each having a different porosity. For example, the road surface of the road section may be formed of a highly porous material and thus allow liquid to travel away from the road surface, carrying road treatment material away with the liquid. Therefore, in such an example, the control system 10 may determine a high treatment material index 11, indicating a higher degradation rate for the road section, based on the indication that the road section is highly porous.

For example, the indication of the presence of a pothole may indicate the presence and location of one or more pothole in the road surface of the road section. For example, the road section may comprise one or more pothole and therefore, may cause pooling of the road treatment material. As such, in the presence of potholes, the control system 10 may determine a low treatment material index 11, indicating a low degradation rate for the road section, based on the present of potholes. Further, if the presence of the one or more potholes is detected by the control system 10, the control system 10 may transmit data indicative of the presence of the one or more potholes to a local authority to alert the local authority of the presence of the one or more potholes.

For example, the indication of the presence of a lane groove may indicate the presence and location of one or more lane groove in the road surface of the road section. For example, the road section may comprise one or more lane groove, a lane groove being a depression in the road surface due to use (e.g. by tires of road vehicles), which may influence the running and/or pooling of any fluids (e.g. rain water, road treatment material and/or the like). As such, when the presence of a lane groove is indicated, the control system 10 may determine a low treatment material index 11 for the road section indicating a low degradation rate for the road section.

In some embodiments, the control system 10 may be configured to receive the environment data 13 comprising the road gradient information. As an example, the road gradient information may be received from one or more of the storage unit 14 and/or the server, a sensor (discussed below); and the V2X communication. The road gradient information may indicate an inclination of the road section in at least one direction. For example, the road gradient information may indicate the inclination of the road section in a direction of travel of the road treatment vehicle 20 and/or may indicate the inclination of the road section in a direction perpendicular to the direction of travel of the road treatment vehicle 20. The road gradient information may be captured by one or more gradient sensors (e.g. an accelerometer, wheel speed sensors, power train force information and/or the like) and/or may be indicated in the map data, received by the road treatment vehicle 20. As an example, the road gradient information may indicate that the gradient of the road section in the direction of travel of the road treatment vehicle 20 is high and positive (e.g. in a scenario that the road treatment vehicle 20 is travelling up a hill). As a result, treatment material present on the surface of such a road section may have a high degradation rate (as it may flow down the high gradient) and, as such, the control system 10 may determine a high treatment material index 11 for the road section.

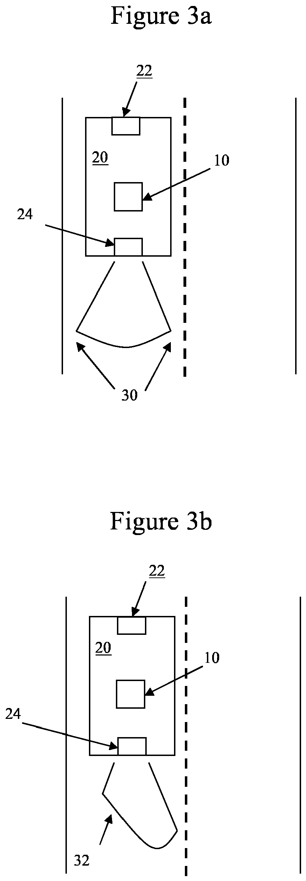

According to the invention, the control system 10 is configured to determine, in dependence on determining the treatment material index, one or more road treatment parameter 15 for the road treatment material. In some embodiments, the one or more road treatment parameter 15 of the treatment material may comprise: an amount of the treatment material to be deployed on the road section; a treatment material composition; and a treatment material spread pattern, discussed below in relation to Figures 3a and 3b. In some embodiments, the control system 10 is configured to determine the one or more road treatment parameter 15 for the road treatment material by calculating the one or more road treatment parameter 15 based on the treatment material index. For example, for each value(s) of the treatment material index 11, there may be a specific corresponding set of road treatment parameter 15. That is, there may be a polynomial function and/or a look-up table relating the treatment material index 11 to the one or more road treatment parameters 15.

Figure 2a schematically shows an example road treatment vehicle 20. The road treatment vehicle 20 may comprise one or more of a sensor unit 22, a location sensor unit 26, a treatment material deployment means 24, and the control system 10. The control system 10 may be the same as that discussed above in relation to Figures 1a-1b.

The sensor unit 22 may comprise at least one sensor device configured to acquire the salinity data 16 and/or the environment data 13. For example the sensor unit 22 may comprise a salinity sensor configured to acquire the indication of the salinity of the surface of the road section. In some embodiments, the indication of the salinity of surface of the road section a real-time salinity measurement. In some examples, illustrated in Figure 2b, the sensor unit may comprise two or more salinity sensors 22a, 22b spaced apart, located in respective salinity sensor positions around the road treatment vehicle 20. In some examples, the sensor unit may comprise respective sensors to determine the traffic information, weather information, previous treatment information, road information, and road gradient information, for capturing the environment information 16. In some examples, the sensor unit 22 may capture information not included in the salinity data 16 and/or environment data 13, indicative of a condition internal to the road treatment vehicle 20. For example, the sensor unit 22 may capture information regarding a condition internal to the road treatment vehicle 20. In some embodiments, the sensor unit 22 may be connected to a treatment material reservoir (not illustrated) such as a hopper, a liquid storage tank, and/or a mixing apparatus associated with the vehicle 20 to measure an amount of treatment material remaining in the treatment material reservoir. That is the sensor unit 22 may capture information regarding conditions internal and/or external to the road treatment vehicle 20.

The location sensor 26 comprises means to determine the geographic location of the control system 10, such as a location determining means configured to use one or more of GLONASS, GPS, Galileo or similar.

The road treatment material deployment means 24 may be configured to control the treatment material deployment by the road treatment vehicle 20. The road treatment material deployment means 24 may comprise, in some embodiments, a deployment device for ejecting solid material e.g. road salt or similar, onto the road surface or one or more nozzles for spraying a liquid material onto the road surface. In some embodiments, the road treatment material deployment means 24 may be configured to deploy the treatment material based on one or more road treatment parameters 15 of the treatment material, determined by the control system 10 in dependence on determining the treatment material index 11, as discussed above.

As above, the one or more road treatment parameters 15 of the treatment material may comprise: an amount of the treatment material to be deployed on the road section; a treatment material composition; and a treatment material spread pattern. That is, the one or more road treatment parameters 15 of the treatment material may indicate the manner of deployment of the road treatment material on the road section by the deployment means 24.

In some embodiments, the amount of treatment material may be defined as a weight or volume of the treatment material per unit area of the road surface. The amount of treatment material may be a spread rate uplift indicating a change in the amount of treatment material relative to a previous amount of treatment material determined at the control system 10. For example, a previous amount of treatment material determined at the control system 10 may be 15 g/m² and a spread rate uplift may be 4 g/m², thereby indicating that the amount of treatment material determined at the control system 10 is to be increased by 4 g/m² relative to 15 g/m² (i.e. the previous amount of treatment material) to 19g/m². In some embodiments, the amount of treatment material may be indicative of an absolute amount of treatment material in some examples. For example, the amount of treatment material may be 19g/m², thereby indicating that the amount of treatment material determined at the control system 10 is to be altered to 19 g/m².

The previous amount of treatment material may indicate one or more of a previous spread rate uplift and a default amount of treatment material (i.e. a 'base' amount of treatment material). For example the default amount of treatment material may be understood as an amount of treatment material deployed by the road treatment material if the spread rate uplift is 0 g/m² (e.g. 15g/m² in the above example). The default amount of treatment material may be determined for each road section on which the road treatment material travels based on one or more of treatment data received from a server; an input from a user of the control system 10; and a sensor measurement of sensor unit 22 comprised within the road treatment vehicle 20.

The treatment material spread pattern may indicate a deployment configuration of the treatment material with respect to the road treatment vehicle 20. For example, the treatment material spread pattern may indicate a direction in which the treatment material may be deployed. For example, the direction may be: directly behind the road treatment vehicle 20; towards the right of the road treatment vehicle 20; or towards the left of the road treatment vehicle 20, but may not be limited thereto. Advantageously, by directing the road treatment material, the road treatment vehicle 20 is able to provide a more targeted treatment material spread pattern. For example, the road treatment vehicle 20 may be controlled to deploy treatment material into a lane next to the road treatment vehicle 20. The treatment material spread pattern may be indicative of one or more of a treatment spread width 30 and an asymmetry 32 of the treatment material deployed treatment material (as seen illustrated in Figures 3a and 3b, respectively). The treatment spread width 30 may be understood to describe the lateral spread of the treatment material, once deployed. For example, the treatment spread width may be 0.5 m, 1 m, and 2 m, but is not limited thereto. Advantageously, adjusting the treatment spread width 30 and/or asymmetry 32 of the treatment material may allow a road treatment vehicle 20 to accurately deploy the treatment material based on the treatment material index 11. For example, narrow lanes, dual carriageways, and residential streets may require different treatment spread widths 30 and asymmetries 32 in order to be sufficiently treated. Advantageously, by deploying road treatment material with an asymmetry, the road treatment material may prevent unnecessary deployment of treatment material to a specific area in the vicinity of the road treatment vehicle 20. For example, an asymmetric treatment material deployment configuration may prevent deployment of treatment material on to a side walk adjacent to the road that may be being used by pedestrians. Overall, an accurate spread pattern may reduce bounce when the salt hits the road surface, particularly at higher speeds.

The treatment composition may be indicative of a change in an amount of at least one constituent material used in the treatment material. The at least one constituent material used in the treatment material may be one or more of: a solid constituent and a liquid constituent, wherein a composition comprising at least one solid constituent and at least one liquid constituent may be known as a "pre-wet" composition. The solid constituent may comprise one or more of: a rock salt, a solid chloride salt (e.g. NaCl), sand, and/or an acetate salt or similar. The liquid constituent may comprise one or more of: an aqueous chloride salt (e.g. brine), and/or an aqueous acetate salt or similar. In some examples, an aqueous acetate salt may be comprised within the treatment composition to reduce corrosion when using solid and/or aqueous chloride salt. A change in an amount of the at least one constituent material may comprise at least one of: introducing the at least one constituent material to the treatment material; removing the at least one constituent material from the treatment material; and changing the relative amounts of the at least one constituent material in the treatment material. For example, the change in the amount of at least one constituent material used in the treatment material may introduce a liquid constituent into the dry treatment material (i.e. treatment material consisting only solid constituents), forming a "pre-wet" composition. As another example, the change in the amount of at least one constituent material used in the treatment material may change a relative amount of at least one constituent so that the treatment material transitions from being composed of 70% solid constituent and 30% liquid constituent to being composed of 50% solid constituent and 50% liquid constituent. As yet another example, the change in the amount of at least one constituent material used in the treatment material may introduce further liquid constituents to a "pre-wet" composition (e.g. adding acetate to a "pre-wet" composition). Advantageously, by changing the amount of at least one constituent material used in the treatment material, the present invention may ensure the treatment material being deployed is configured for the respective road surface conditions. The change in the composition may be performed in connection the treatment material reservoir (e.g. a hopper, storage tank, and/or a mixing apparatus), discussed in relation to Figures 2a to 2b.

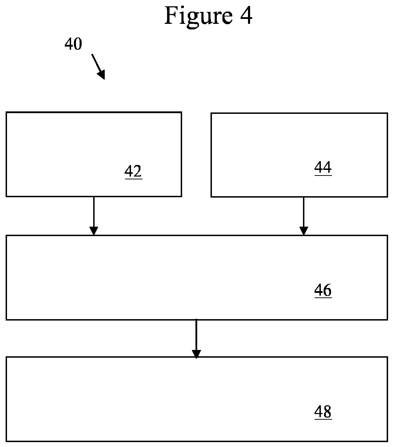

Figure 4 shows an example of a method 40 that may be performed by the control system 10. Step 42 comprises receiving, from a salinity sensor 22 associated with the road treatment vehicle 20, salinity data 16 comprising an indication of a salinity of a surface of a road section on which the road treatment vehicle 20 is located. Step 44 comprises communicating receiving, from a storage unit 14 of the control system 10, historical data 18 comprising historical salinity data indicating the salinity associated with the surface of the road section on which the road treatment vehicle 20 is located at a previous time. Step 46 comprises determining a treatment material index 11 for the road section indicating a degradation rate of treatment material for the road section based on the salinity data 16 and the historical data 18. Step 48 comprises determining, in dependence on determining the treatment material index 11, one or more road treatment parameters 15 for the road treatment material. The method may be performed by computer readable instructions which, when executed by the processor 12 of the control system 10 disclosed herein, are arranged to perform the method 20.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

## Claims

1. A control system (10) for a road treatment vehicle (20), comprising:
a processor (12); and
a storage unit (14) storing computer-readable instructions, wherein, when the computer-readable instructions are accessed and executed by the processor (12), the processor (12) of the control system (10) is configured to:
receive, from a salinity sensor (22) associated with the road treatment vehicle, salinity data (16) comprising an indication of a salinity associated with a surface of a road section on which the road treatment vehicle (20) is located;
receive, from the storage unit (14), historical data (18) comprising historical salinity data indicating the salinity associated with the surface of the road section on which the road treatment vehicle (20) is located at a previous time;
determine a treatment material index (11) for the road section indicating a degradation rate of the treatment material for the road section based on the salinity data (16) and the historical data (18); and
determine, in dependence on determining the treatment material index (11), one or more road treatment parameters (15) for the road treatment material.

2. The control system (10) of claim 1, wherein the processor (12) of the control system (10) is configured to:
receive environmental data comprising one or more of:
traffic information relating to the road section;
weather information relating to the road section;
road information relating to the road section; and
road gradient information relating to the road section; and determine the treatment material index (11) based on the salinity data (16), the historical data (18), and the environment data.

3. The control system (10) of claim 2, wherein any one or more of:
the traffic information indicates a level of traffic on the road section for one or more of:
a time period since the previous time; and
a forecasted time period;
the weather information indicates weather conditions on the road section for one or more of:
the time period since the previous time; and
the forecasted time period; and
the weather information comprises one or more of:
temperature information;
precipitation information; and
wind information.

4. The control system (10) of any of claims 2 to 3, wherein any one or more of:
the road information indicates a property of the road section, the road information being captured by one or more of an image sensor of the road treatment vehicle (20) and map data, indicating a route for the road treatment vehicle; and
the road information comprises one or more of:
an indication of a road type of the road section;
an indication of a roughness of the road section;
an indication of a porosity of the road section;
an indication of a presence of a pothole in the road section; and
an indication of a presence of a lane groove in the road section.

5. The control system (10) of claim 4, wherein the road information is captured by at least two image sensors of the road treatment vehicle, wherein the at least two image sensors are spaced apart, located in respective image sensor positions around the road treatment vehicle.

6. The control system (10) of any of claims 2 to 5, wherein the road gradient information indicates an inclination of the road section in at least one direction, the road gradient information being determined by one or more of the map data and an inclination sensor of the road treatment vehicle.

7. The control system (10) of any preceding claim, wherein any one or more of:
the historical data (18) comprises:
previous treatment information indicating one or more of a previous amount of the treatment material and a previous composition of the treatment material used on the road section at the previous time; and
the salinity data (16) is received from two or more salinity sensors (22) spaced apart, located in respective salinity sensor (22) positions around the road treatment vehicle.

8. The control system (10) of any preceding claim, wherein the one or more road treatment parameters (15) comprises: an amount of the treatment material to be deployed on the road section, and/or a treatment material composition; and/or a treatment material spread pattern;
optionally wherein the treatment composition indicates the respective amounts of treatment material constituents to be prepared, by a mixing apparatus of the road treatment vehicle, for use on the road section.

9. The control system (10) of claim 8, wherein the treatment material spread pattern is indicative of a treatment material deployment configuration of the treatment material with respect to the road treatment vehicle,
optionally wherein the treatment material spread pattern is indicative of one or more of a treatment spread width and an asymmetry of the treatment material deployment.

10. The control system (10) of any preceding claim, wherein any one or more of:
the indication of the salinity of the surface of the road section is a real-time salinity measurement; and
the treatment material index (11) is used for determining an estimate of the one or more of the road treatment parameters (15) for the road treatment material for use on the road section, when a future route for the road treatment vehicle (20) is determined.

11. A method performed by a processor (12) of a control system (10) for a road treatment vehicle, the method comprising:
receiving, from a salinity sensor (22) associated with the road treatment vehicle, salinity data (16) comprising an indication of a salinity of a surface of a road section on which the road treatment vehicle (20) is located;
receiving, from a storage unit (14) of the control system (10), historical data (18) comprising historical salinity data (16) indicating the salinity associated with the surface of the road section on which the road treatment vehicle (20) is located at a previous time
determining, a treatment material index (11) for the road section indicating a degradation rate of the treatment material for the road section based on the salinity data (16) and the historical data (18); and
determining, in dependence on determining the treatment material index (11), one or more road treatment parameters (15) for the road treatment material.

12. A vehicle (20) comprising the control system (10) of any of claims 1-10.

13. Computer readable medium comprising instructions which, when executed by a processor (12) of the control system (10) of any of claims 1 to 10, are arranged to perform the method of claim 11.

## Patentansprüche

1. Steuersystem (10) für ein Straßenbehandlungsfahrzeug (20), aufweisend:
einen Prozessor (12); und
eine Speichereinheit (14), die computerlesbare Anweisungen speichert, wobei, wenn auf die computerlesbaren Anweisungen zugegriffen wird und diese durch den Prozessor (12) ausgeführt werden, der Prozessor (12) des Steuersystems (10) für Folgendes konfiguriert ist:
Empfangen, von einem Salinitätssensor (22), der mit dem Straßenbehandlungsfahrzeug verbunden ist, von Salinitätsdaten (16), die eine Angabe einer Salinität in Verbindung mit einer Oberfläche eines Straßenabschnitts, auf dem sich das Straßenbehandlungsfahrzeug (20) befindet, aufweisen;
Empfangen, von der Speichereinheit (14), von historischen Daten (18), die historische Salinitätsdaten aufweisen, die die Salinität in Verbindung mit der Oberfläche des Straßenabschnitts, auf dem sich das Straßenbehandlungsfahrzeug (20) zu einem früheren Zeitpunkt befindet, angeben;
Bestimmen eines Behandlungsmaterialindexes (11) für den Straßenabschnitt, der eine Abbaurate des Behandlungsmaterials für den Straßenabschnitt basierend auf den Salinitätsdaten (16) und den historischen Daten (18) angibt; und
Bestimmen, in Abhängigkeit von dem Bestimmen des Behandlungsmaterialindexes (11), eines oder mehrerer Straßenbehandlungsparameter (15) für das Straßenbehandlungsmaterial.

2. Steuersystem (10) nach Anspruch 1, wobei der Prozessor (12) des Steuersystems (10) für Folgendes konfiguriert ist:
Empfangen von Umgebungsdaten, die eines oder mehrere von Folgendem aufweisen:
Verkehrsinformationen im Zusammenhang mit dem Straßenabschnitt;
Wetterinformationen im Zusammenhang mit dem Straßenabschnitt;
Straßeninformationen im Zusammenhang mit dem Straßenabschnitt; und
Straßenneigungsinformationen im Zusammenhang mit dem Straßenabschnitt; und
Bestimmen des Behandlungsmaterialindexes (11) basierend auf den Salinitätsdaten (16), den historischen Daten (18) und den Umgebungsdaten.

3. Steuersystem (10) nach Anspruch 2, wobei eines oder mehrere von Folgendem zutreffen:
die Verkehrsinformationen geben ein Verkehrsaufkommen auf dem Straßenabschnitt für eines oder mehrere der Folgenden an:
einen Zeitraum seit dem früheren Zeitpunkt; und
einen vorhergesagten Zeitraum;
die Wetterinformationen geben Wetterbedingungen auf dem Straßenabschnitt für eines oder mehrere der Folgenden an:
den Zeitraum seit dem früheren Zeitpunkt; und
den vorhergesagten Zeitraum; und
die Wetterinformationen weisen eines oder mehrere der Folgenden auf:
Temperaturinformationen;
Niederschlagsinformationen; und
Windinformationen.

4. Steuersystem (10) nach einem der Ansprüche 2 bis 3, wobei eines oder mehrere von Folgendem zutreffen:
die Straßeninformationen geben eine Eigenschaft des Straßenabschnitts an, wobei die Straßeninformationen durch eines oder mehrere von einem Bildsensor des Straßenbehandlungsfahrzeugs (20) und Kartendaten, die eine Route für das Straßenbehandlungsfahrzeug angeben, erfasst werden; und
die Straßeninformationen weisen eines oder mehrere der Folgenden auf:
eine Angabe eines Straßentyps des Straßenabschnitts;
eine Angabe einer Rauigkeit des Straßenabschnitts;
eine Angabe einer Porosität des Straßenabschnitts;
eine Angabe über ein Vorhandensein eines Schlaglochs in dem Straßenabschnitt; und
eine Angabe über ein Vorhandensein einer Spurrille in dem Straßenabschnitt.

5. Steuersystem (10) nach Anspruch 4, wobei die Straßeninformationen durch zumindest zwei Bildsensoren des Straßenbehandlungsfahrzeugs erfasst werden, wobei die zumindest zwei Bildsensoren voneinander beabstandet sind und sich in jeweiligen Bildsensorpositionen um das Straßenbehandlungsfahrzeug herum befinden.

6. Steuersystem (10) nach einem der Ansprüche 2 bis 5, wobei die Straßenneigungsinformationen eine Neigung des Straßenabschnitts in zumindest einer Richtung angeben, wobei die Straßenneigungsinformationen durch eines oder mehrere von den Kartendaten und einem Neigungssensor des Straßenbehandlungsfahrzeugs bestimmt werden.

7. Steuersystem (10) nach einem der vorhergehenden Ansprüche, wobei eines oder mehrere von Folgendem zutrifft:
die historischen Daten (18) weisen auf:
frühere Behandlungsinformationen, die eines oder mehrere von einer früheren Menge des Behandlungsmaterials und einer früheren Zusammensetzung des Behandlungsmaterials, das zu dem früheren Zeitpunkt auf dem Straßenabschnitt verwendet wurde, angeben; und
die Salinitätsdaten (16) werden von zwei oder mehr voneinander beabstandeten Salinitätssensoren (22) empfangen, die sich in jeweiligen Salinitätssensorpositionen (22) um das Straßenbehandlungsfahrzeug herum befinden.

8. Steuersystem (10) nach einem der vorhergehenden Ansprüche, wobei der eine oder die mehreren Straßenbehandlungsparameter (15) Folgendes aufweisen: eine Menge des Behandlungsmaterials, die auf dem Straßenabschnitt eingesetzt werden soll, und/oder eine Behandlungsmaterialzusammensetzung;
und/oder ein Behandlungsmaterial-Ausbreitungsmuster;
wobei die Behandlungszusammensetzung optional die jeweiligen Mengen von Behandlungsmaterialbestandteilen angibt, die, durch eine Mischvorrichtung des Straßenbehandlungsfahrzeugs, zur Verwendung auf dem Straßenabschnitt hergestellt werden sollen.

9. Steuersystem (10) nach Anspruch 8, wobei das Behandlungsmaterial-Ausbreitungsmuster eine Behandlungsmaterial-Einsatzkonfiguration des Behandlungsmaterials in Bezug auf das Straßenbehandlungsfahrzeug angibt,
wobei das Behandlungsmaterial-Ausbreitungsmuster optional eines oder mehrere von einer Behandlungsausbreitungsbreite und einer Asymmetrie des Behandlungsmaterialeinsatzes angibt.

10. Steuersystem (10) nach einem der vorhergehenden Ansprüche, wobei eines oder mehrere von Folgendem zutreffen:
die Angabe der Salinität der Oberfläche des Straßenabschnitts ist eine Echtzeit-Salinitätsmessung; und
der Behandlungsmaterialindex (11) wird zum Bestimmen einer Schätzung des einen oder der mehreren Straßenbehandlungsparameter (15) für das Straßenbehandlungsmaterial zur Verwendung auf dem Straßenabschnitt verwendet, wenn eine zukünftige Route für das Straßenbehandlungsfahrzeug (20) bestimmt wird.

11. Verfahren, das von einem Prozessor (12) eines Steuersystems (10) für ein Straßenbehandlungsfahrzeug durchgeführt wird, wobei das Verfahren Folgendes aufweist:
Empfangen, von einem Salinitätssensor (22), der mit dem Straßenbehandlungsfahrzeug verbunden ist, von Salinitätsdaten (16), die eine Angabe einer Salinität einer Oberfläche eines Straßenabschnitts, auf dem sich das Straßenbehandlungsfahrzeug (20) befindet, aufweisen;
Empfangen, von einer Speichereinheit (14) des Steuersystems (10), von historischen Daten (18), die historische Salinitätsdaten (16) aufweisen, die die Salinität in Verbindung mit der Oberfläche des Straßenabschnitts, auf dem sich das Straßenbehandlungsfahrzeug (20) zu einem früheren Zeitpunkt befindet, angeben;
Bestimmen eines Behandlungsmaterialindexes (11) für den Straßenabschnitt, der eine Abbaurate des Behandlungsmaterials für den Straßenabschnitt basierend auf den Salinitätsdaten (16) und den historischen Daten (18) angibt; und
Bestimmen, in Abhängigkeit von dem Bestimmen des Behandlungsmaterialindexes (11), eines oder mehrerer Straßenbehandlungsparameter (15) für das Straßenbehandlungsmaterial.

12. Fahrzeug (20), das das Steuersystem (10) nach einem der Ansprüche 1-10 aufweist.

13. Computerlesbares Medium, das
Anweisungen aufweist, die, wenn sie durch einen Prozessor (12) des Steuersystems (10) nach einem der Ansprüche 1 bis 10 ausgeführt werden, dafür ausgelegt sind, das Verfahren nach Anspruch 11 durchzuführen.

## Revendications

1. Système de commande (10) pour un véhicule de traitement de route (20), comprenant :
un processeur (12) ; et
une unité de stockage (14) stockant des instructions lisibles par ordinateur, dans laquelle, lorsque les instructions lisibles par ordinateur sont accédées et exécutées par le processeur (12), le processeur (12) du système de commande (10) est configuré pour :
recevoir, à partir d'un capteur de salinité (22) associé au véhicule de traitement de route, des données de salinité (16) comprenant une indication d'une salinité associée à une surface d'une section de route sur laquelle le véhicule de traitement de route (20) est situé ;
recevoir, à partir de l'unité de stockage (14), des données historiques (18) comprenant des données historiques de salinité indiquant la salinité associée à la surface de la section de route sur laquelle le véhicule de traitement de route (20) est situé à un moment précédent ;
déterminer un indice de matériau de traitement (11) pour la section de route indiquant un taux de dégradation du matériau de traitement pour la section de route sur base des données de salinité (16) et des données historiques (18) ; et
déterminer, en fonction de la détermination de l'indice de matériau de traitement (11), un ou plusieurs paramètres de traitement de route (15) pour le matériau de traitement de route.

2. Système de commande (10) selon la revendication 1, dans lequel le processeur (12) du système de commande (10) est configuré pour :
recevoir des données environnementales comprenant une ou plusieurs parmi :
des informations de trafic concernant la section de route ;
des informations météorologiques concernant la section de route ;
des informations de route concernant la section de route ; et
des informations de pente de route concernant la section de la route ; et
déterminer l'indice de matériau de traitement (11) sur base des données de salinité (16), des données historiques (18) et des données d'environnement.

3. Système de commande (10) selon la revendication 2, dans lequel un ou plusieurs parmi :
les informations de trafic indiquent un niveau de trafic sur la section de route pour une ou plusieurs parmi :
une période de temps depuis le moment précédent ; et
une période de temps prévue ;
les informations météorologiques indiquent les conditions météorologiques sur la section de route pour une ou plusieurs parmi :
la période de temps depuis le moment précédent ; et
la période de temps prévue ; et
les informations météorologiques comprennent une ou plusieurs parmi :
des informations de température ;
des informations de précipitation ; et
des informations de vent.

4. Système de commande (10) selon l'une quelconque des revendications 2 à 3, dans lequel une ou plusieurs parmi :
les informations de route indiquent une propriété de la section de route, les informations de route étant capturées par un ou plusieurs parmi un capteur d'image du véhicule de traitement de route (20) et des données cartographiques, indiquant un itinéraire pour le véhicule de traitement de route ; et
les informations de route comprennent une ou plusieurs parmi :
une indication d'un type de route de la section de route ;
une indication d'une rugosité de la section de route ;
une indication d'une porosité de la section de route ;
une indication de la présence d'un nid de poule dans la section de route ; et
une indication de la présence d'un sillon dans la section de route.

5. Système de commande (10) selon la revendication 4, dans lequel les informations de route sont capturées par au moins deux capteurs d'image du véhicule de traitement de route, dans lequel les au moins deux capteurs d'image sont espacés, situés dans des positions de capteur d'image respectives autour du véhicule de traitement de route.

6. Système de commande (10) selon l'une quelconque des revendications 2 à 5, dans lequel les informations de pente de route indiquent une inclinaison de la section de route dans au moins une direction, les informations de pente de route étant déterminées par un ou plusieurs parmi les données de carte et un capteur d'inclinaison du véhicule de traitement de route.

7. Système de commande (10) selon l'une quelconque des revendications précédentes, dans lequel l'une quelconque ou plusieurs parmi :
les données historiques (18) comprennent :
des informations de traitement précédentes indiquant une ou plusieurs parmi une quantité précédente du matériau de traitement et une composition précédente du matériau de traitement utilisé sur la section de route au moment précédent ; et
les données de salinité (16) sont reçues à partir de deux capteurs de salinité (22) ou plus espacés, situés dans des positions de capteurs de salinité (22) respectives autour du véhicule de traitement de route.

8. Système de commande (10) selon l'une quelconque des revendications précédentes, dans lequel le ou les paramètres de traitement de route (15) comprennent : une quantité de matériau de traitement à déployer sur la section de route, et/ou une composition de matériau de traitement ;
et/ou un modèle d'étalement de matériau de traitement ; éventuellement dans lequel la composition de traitement indique les quantités respectives de constituants du matériau de traitement à préparer, au moyen d'un appareil de mélange du véhicule de traitement de route, à utiliser sur le tronçon de route.

9. Système de commande (10) selon la revendication 8, dans lequel le modèle d'étalement de matériau de traitement est indicatif d'une configuration de déploiement de matériau de traitement du matériau de traitement par rapport au véhicule de traitement de route,
éventuellement dans lequel le modèle d'étalement de matériau de traitement indique une ou plusieurs parmi une largeur d'étalement de traitement et une asymétrie du déploiement de matériau de traitement.

10. Système de commande (10) selon l'une quelconque des revendications précédentes, dans lequel un quelconque ou plusieurs parmi :
l'indication de la salinité de la surface de la section de route est une mesure de salinité en temps réel ; et
l'indice de matériau de traitement (11) est utilisé pour la détermination d'une estimation du ou des paramètres de traitement de route (15) pour le matériau de traitement de route à utiliser sur la section de route, lorsqu'un futur itinéraire pour le véhicule de traitement de route (20) est déterminé.

11. Procédé exécuté par un processeur (12) d'un système de commande (10) pour un véhicule de traitement de route, le procédé comprenant :
la réception, à partir d'un capteur de salinité (22) associé au véhicule de traitement de route, de données de salinité (16) comprenant une indication d'une salinité d'une surface d'une section de route sur laquelle le véhicule de traitement de route (20) est situé ;
la réception, à partir d'une unité de stockage (14) du système de commande (10), de données historiques (18) comprenant des données historiques de salinité (16) indiquant la salinité associée à la surface de la section de route sur laquelle le véhicule de traitement de route (20) est situé à un moment précédent
la détermination, d'un indice de matériau de traitement (11) pour la section de route indiquant un taux de dégradation du matériau de traitement pour la section de route sur base des données de salinité (16) et des données historiques (18) ; et
la détermination, en fonction de la détermination de l'indice de matériau de traitement (11), d'un ou plusieurs paramètres de traitement de route (15) pour le matériau de traitement de route.

12. Véhicule (20) comprenant le système de commande (10) selon l'une quelconque des revendications 1 à 10.

13. Support lisible par ordinateur comprenant
des instructions qui, lorsqu'elles sont exécutées par un processeur (12) du système de commande (10) selon l'une quelconque des revendications 1 à 10, sont agencées pour exécuter le procédé selon la revendication 11.
